# EUROPEAN PATENT APPLICATION

(11) **EP 2 390 881 A1**
(43) Date of publication of application: **30.11.2011**
(21) Application number: 10191775.5
(22) Date of filing: 18.11.2010
(51) Int. Cl.: G11B 27/034, G11B 27/10, G11B 27/32, H04N 5/76, H04N 9/804, H04L 29/12, H04L 12/28, H04N 7/16

(54) **Video signal processing apparatus and video signal processing method**

(30) Priority: 24.05.2010 JP 2010118623
(71) Applicant: Kabushiki Kaisha Toshiba, Tokyo 105-8001 (JP)
(72) Inventor: Yamanashi, Naoki, Tokyo 105-8001 (JP)
(74) Representative: Henkel, Breuer & Partner

(57) **Abstract**

According to one embodiment, a moving picture file management module (221) manages a moving picture file containing a moving picture. A thumbnail file management module (222) manages a thumbnail file containing a thumbnail image created from a part of the moving picture. A reproduction referring data management module (223) manages a reproduction referring data file containing reproduction referring data necessary for reproducing the moving picture and thumbnail image. An index is assigned to the reproduction referring data, and data corresponding to the index is assigned to a header of the thumbnail file corresponding to the reproduction referring data.

## Description

Embodiments described herein relate generally to a video signal processing apparatus and a video signal processing method.

A video signal processing apparatus used in a television receiver or a signal recording/reproduction unit has a thumbnail processor. A thumbnail processor has a function of creating a thumbnail image and sending it to a recording unit. A thumbnail processor has a function of reading a thumbnail image from a recording unit and sending it to a display unit.

When a thumbnail image is created and recorded, or when a thumbnail image is read and displayed, if the number of thumbnails to be handled at a time is increased, image signal processing time is increased. Thus, when a thumbnail image is processed, the wait time for the user is increased. This needs to be improved.

It is an object of an embodiment to provide a video signal processing apparatus and a video signal processing method, which are capable of reducing the wait time when a thumbnail image is processed.

According to an embodiment, there is provided a video signal processing apparatus comprising a moving picture file management module configured to manage a moving picture file containing a moving picture; a thumbnail file management module configured to mange a thumbnail file containing a thumbnail image created from a part of the moving picture; and a reproduction referring data management module configured to mange a reproduction referring data file containing reproduction referring data required for reproducing the moving picture and thumbnail image, wherein an index is assigned to the reproduction referring data, and data corresponding to the index is assigned to a header of the thumbnail file corresponding to the reproduction referring data.

A general architecture that implements the various feature of the embodiments will now be described with reference to the drawings. The drawings and the associated descriptions are provided to illustrate the embodiments and not to limit the scope of the invention.
FIG. 1 is a diagram showing an exemplary configuration of a broadcast receiver, in which an embodiment is applied;
FIG. 2 shows the relationship between files stored on a storage medium in FIG. 1;
FIGS. 3A and 3B are flowcharts of creating a thumbnail file while receiving a broadcast signal, and creating a thumbnail file when reading from a storage medium;
FIG. 4 is a flowchart showing an example of creating a thumbnail file;
FIG. 5 is a flowchart of reproducing a moving picture; and
FIG. 6 is a flowchart of reproducing a thumbnail image.

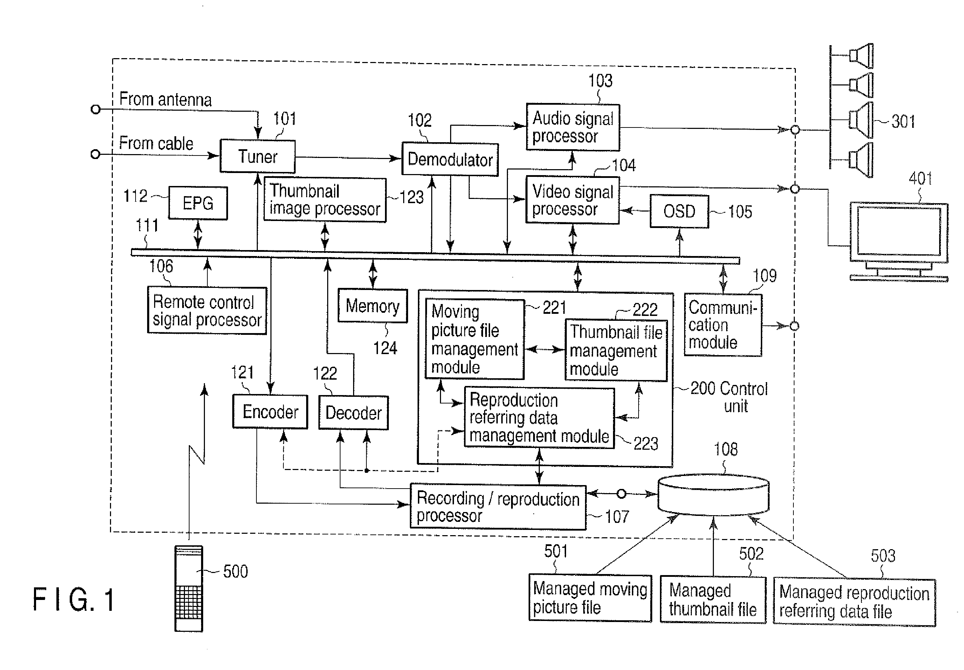

Various embodiments will be described hereinafter with reference to the accompanying drawings. FIG. 1 shows a block diagram of a broadcast receiver according to an embodiment. A tuner 101 receives a broadcast wave or a high-frequency signal through a cable. The tuner 101 is compatible with digital terrestrial broadcasting, satellite broadcasting, and analog broadcasting.

The tuner 101 outputs a stream (including a broadcast program signal) selected in response to a tuning signal and program selecting signal, to a demodulator 102. The demodulator 102 separates audio data, video data, and control data from a broadcast program signal, and supplies the separated audio data to an audio signal processor 103, and the separated video data to a video signal processor 104. The demodulator 102 includes a phase shift keying (PSK) demodulator, an orthogonal frequency division multiplexing (OFDM) demodulator, an analog demodulator, and a format converter. The audio signal processor 103 decodes the input audio data, and outputs an analog audio signal to a speaker system 301. The video signal processor 104 decodes the input video data, and outputs a decoded video signal to a display 401. A Moving Picture Experts Group (MPEG) system is used as a video data decoding system.

The video signal processor 104 can combine a main video signal with a channel number signal and characters/symbols/graphics signals from an onscreen display (OSD) processor 105. The video signal processor 104 can combine graphics such as a broadcast program guide table using data such as electronic broadcast program guide (EPG) data from the OSD processor 105. Further, the video signal processor 104 can combine graphics such as a menu.

A remote control signal processor 106 accepts an operation signal from a remote controller 500, interprets a command, and transfers it to a control unit 200.

An electronic program guide (EPG) data processor 112 can take in EPG data from a data packet demodulated by the demodulator 102, and save it, under the control of the control unit 200. The EPG data is periodically updated. The EPG data can also be taken in through a communication module 109. The communication module 109 can communicate with a server through an external network, under the control of the control unit 200.

The tuner 101, demodulator 102, audio signal processor 103, video signal processor 104, OSD processor 105, remote control signal processor (operation signal processor) 106, recording/reproduction processor 107, communication module 109, and EPG data processor 112 are connected to the control unit 200 through a main bus 111.

A recording format conversion encoder 121, and a recording format reverse-conversion decoder 122 are connected to the demodulator 102, audio signal processor 103, video signal processor 104, and control unit 200, through the bus 111. A Digital Versatile Disc (DVD) and Blu-ray Disk are available as a recording format.

The program signal demodulated by the demodulator 102 is encoded by an encoder 121, and recorded on a recording medium 108 (e.g., a hard disk) by the recording/reproduction processor 107, under the control of the control unit 200. The encoded signal read from the recording medium 108 by the recording/reproduction processor 107 is decoded by the decoder 122, under the control of the control unit 200, and the audio data is supplied to the audio data processor 103, and the video data is supplied to the video signal processor 104.

A thumbnail image processor 123 is connected to the bus 111, and a thumbnail image is created under the control of the control unit 200. A thumbnail image is also encoded by the encoder 121, and recorded on the recording medium 108 through the recording/reproduction processor 107. A thumbnail image is created by reducing one frame of a moving picture.

A memory 124 is connected to the bus 111, and is used as a buffer when moving picture data is processed.

The control unit 200 includes a moving picture file management module 221, a thumbnail file management module 222, and a reproduction referring data management module 223, which execute the function peculiar to the apparatus.

When a video signal of a received program is encoded by the encoder 121 and stored on the recording medium 108, the moving picture file management module 221 creates a header corresponding to the encoded moving picture, and creates and manages a moving picture file. Therefore, the recording medium 108 stores a plurality of managed moving picture files 501. When a moving picture file is reproduced, the moving picture file management module 221 reads a moving picture file management data (not shown) from the recording medium 108 through the recording/reproduction processor 107, and recognizes a thumbnail file storage position.

When a thumbnail image created by the thumbnail image processor 123 is encoded by the encoder 121 and stored on the recording medium 108, the thumbnail file management module 222 creates a header corresponding to the encoded thumbnail image, and creates and manages a thumbnail file. Therefore, the recording medium 108 stores a plurality of managed thumbnail files 502. When a thumbnail file is reproduced, the thumbnail file management module 222 reads a thumbnail file management data (not shown) from the recording medium 108 through the recording/reproduction processor 107, and recognizes a thumbnail file storage position.

Further, a reproduction referring data file 503, which is necessary for reproducing a moving picture file and a thumbnail file corresponding to the moving picture file, is also created, and stored on the recording medium 108 through the recording/reproduction processor 107. The reproduction referring data file is created by the reproduction referring data management module 223. The reproduction referring data file is stored on the recording medium 108, and managed by the reproduction referring data management module 223. When reproduction referring data is reproduced, the reproduction referring data management module 223 reads reproduction referring data management data (not shown) from the recording medium 108 through the recording/reproduction processor 107, and recognizes a reproduction referring data file storage position.

The recording medium 108 may be provided in a broadcast receiver as a hard disk unit, or may be removable, or may be connected through a home network. Further, the recording medium is not limited to a hard disk, and may be a removable optical disc or a semiconductor memory.

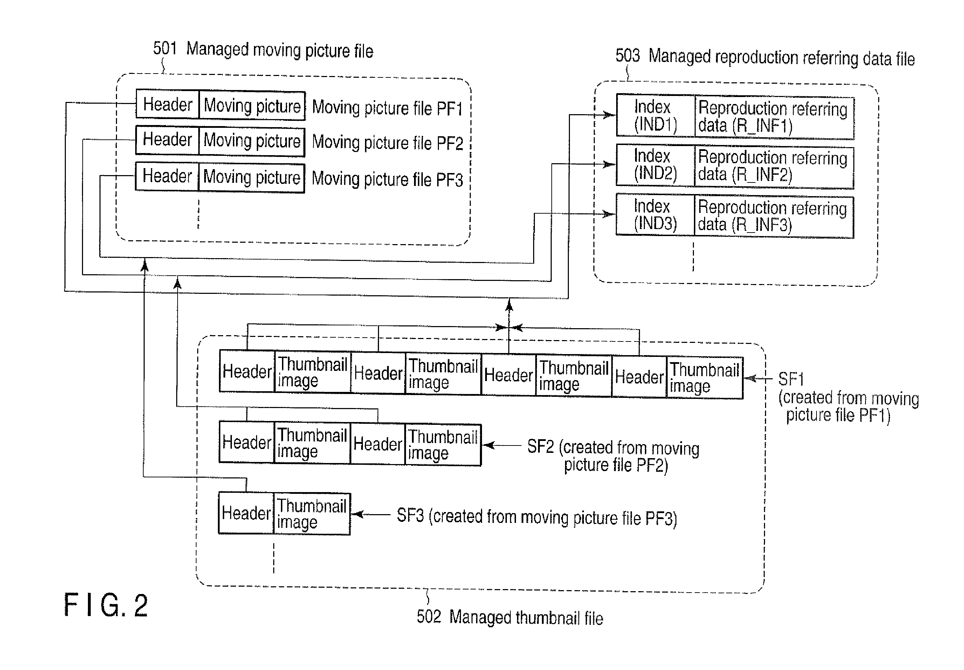

FIG. 2 shows the relationship between the managed moving picture file 501, managed thumbnail file 502, and managed reproduction referring data file 503. Moving picture files PF1, PF2 and PF3 are shown as examples of the managed moving picture file 501. Moving picture files PF1, PF2 and PF3 include moving pictures and headers. A header includes data (e.g., an index number) to specify an index in the reproduction referring data file 503.

A header of moving picture file PF1 includes an index number (IND1). A header of moving picture file PF2 includes an index number (IND1). A header of moving picture file PF3 includes an index number (IND3). A first reproduction referring data file in the reproduction referring data file 503 has an index (IND1), and reproduction referring data (R_INF1), and corresponds (relates) to moving picture file PF1. A second reproduction referring data file has an index (IND2), and reproduction referring data (R_INF2), and corresponds (relates) to moving picture file PF2. A third reproduction referring data file has an index (IND3), and reproduction referring data (R_INF3), and corresponds (relates) to moving picture file PF3.

Reproduction referring data includes data necessary for reproducing a moving picture in a corresponding moving picture file, for example, a media access control (MAC) address of a corresponding broadcast receiver (a digital television), or data peculiar to a device. A MAC address may be an address of a recording/reproduction unit or a hard disk drive. A MAC address is an example of data necessary for reproducing a moving picture.

A header of moving picture file PF1 includes data to specify an index (IND1). Based on this related data, the reproduction referring data (R_INF1) corresponding to the index (IND1) is read and checked. If the data included in the reproduction referring data (R_INF1) and necessary for reproducing a moving picture (e.g., the data including the above-described MAC address) is not applicable to a present broadcast receiver or a reproduction unit, the data is not normally reproduced. However, if the data included in the reproduction referring data (R_INF1) is applicable to a present broadcast receiver or a reproduction unit, the data is normally reproduced. The applicability of data may be determined based on the result of determining whether the data, such as standards, settings and reproduction conditions, conforms to the predetermined contents. The settings and reproduction conditions may be resolution and picture size.

FIG. 2 shows a thumbnail file SF1 created by using a part of moving picture file PF1, a thumbnail file SF2 created from moving picture file PF2, and a thumbnail file SF3 created from moving picture file PF3, as a managed thumbnail file 502.

In this example, thumbnail file SF1 consists of four thumbnail images, and headers attached to the heads of these thumbnail images. Thumbnail file SF2 consists of two thumbnail images, and heads attached to the heads of these thumbnail images. Thumbnail file SF3 consists of one thumbnail image, and a head attached to the beginning of the thumbnail file.

Four headers included in thumbnail file SF1 include data (index number [IND1]) to specify the index (IND1). Two headers included in thumbnail file SF2 include data (index number [IND2]) to specify the index (IND2). The header included in thumbnail file SF3 includes data (index number [IND3]) to specify the index (IND3).

As described above, the moving picture file, thumbnail file, and reproduction referring data file are correlated. When a thumbnail image of thumbnail file SF1 is reproduced, an index in any one of the heads of the thumbnail file is read. A reproduction referring data file having the same index as the index number (IND1) of the read index is detected. The reproduction referring data (R_INF1) in the detected reproduction referring data file is used to reproduce a thumbnail image. If a MAC address in the reproduction referring data (R_INF1) is different from that used in a present broadcast receiver, a thumbnail image is not normally reproduced. However, if a MAC address in the reproduction referring data (R_INF1) specifies a present broadcast receiver, a thumbnail image is normally reproduced.

According to the apparatus described above, when a thumbnail image is reproduced, an index number is obtained from a header included in a thumbnail file, a reproduction referring data file having the same index number is directly detected, and the reproduction referring data included in the reproduction referring data file is used. Therefore, a thumbnail image is quickly reproduced.

However, when a thumbnail image is reproduced, it takes time if follow the steps of reading a header of a moving picture file, obtaining an index number in the header, obtaining the reproduction referring data corresponding to the index number, and reproducing a thumbnail image by using the reproduction referring data. And if the number of thumbnail images to reproduce is increased, the wait time to display a thumbnail image becomes long.

In the embodiment described above, when a thumbnail image is reproduced, an index number is directly obtained from a header included in a thumbnail file, a reproduction referring data file having the same index number is detected, and a thumbnail image is displayed by using the reproduction referring data included in the reproduction referring data file. Therefore, the time to display a thumbnail image is reduced. Management data is read from the recording medium 108 as follows. First, data such as management data to manage a file storage position (e.g., a file system) is taken in the control unit 200 through the recording/reproduction processor 107. Then, a file entry point is detected from the management data, and the beginning of each file is read and stored in temporary memory based on the file entry point. In other words, the headers of the reproduction referring data file, moving picture file and thumbnail file stored on the recording medium 108 are taken in the control unit 200 through the recording/reproduction processor 107. Then, the header is cut off, and the relation to the reproduction referring data is recognized. In this way, reproduction referring data for reproducing a thumbnail image and moving picture can be obtained.

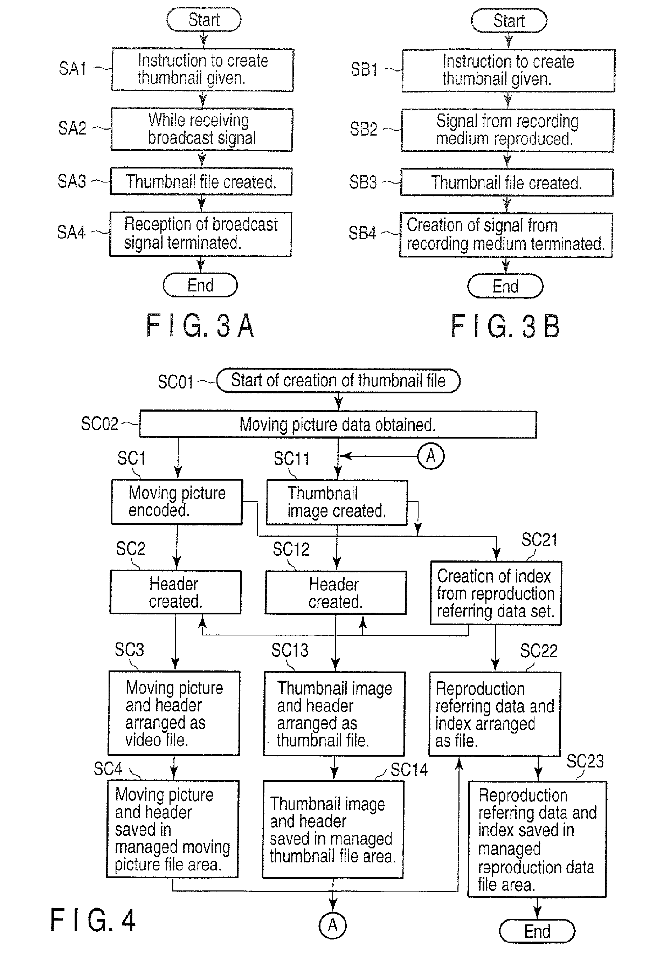

Next, an explanation will be given of the process of creating a thumbnail file with reference to the flowcharts of FIGS. 3A and 3B. A thumbnail file is created while a moving picture is being received (FIG. 3A), or while a moving picture is being read from a recording medium (FIG. 3B). In this embodiment, if a corresponding thumbnail file is not present when a moving picture is read from a recording medium, a thumbnail file can be automatically created.

FIG. 3A shows an example, in which when instruction to create a thumbnail is given (step SA1) while receiving a broadcast signal (step SA2), a thumbnail file is created (step SA3), and when reception of the broadcast signal is terminated (step SA4), creation of the thumbnail file is stopped. In this embodiment, a thumbnail file is basically created, but when creation of a thumbnail file is cancelled by the user, a thumbnail file is not created.

FIG. 3B shows an example, in which a corresponding thumbnail file is not created (not present) for a moving picture recorded on a storage medium, a thumbnail file is newly created. When instruction to create a thumbnail file is given (step SB1) while reproducing a signal from a recording medium (step SB2), a thumbnail file is created (step SB3), and when reproduction of the signal from the recording medium is terminated (step SB4), creation of the thumbnail file is stopped.

FIG. 4 is a flowchart for explaining the process of creating a thumbnail file. When creation of a thumbnail file is started (SC02), moving picture data is obtained (step SC03). When the moving picture data is a moving picture data while receiving a broadcast, a moving picture encoding step (step SC1) for recording the data on a recording medium is executed. The data used when encoding the moving picture data is used also when decoding the moving picture data. This data is called reproduction referring data. Therefore, at this time, reproduction referring data is created, and an index is assigned to the reproduction referring data (step SC21).

Next, a corresponding index (e.g., an index number) is inserted into a header of a moving picture (step SC2). For example, when processing of moving picture data of one program is finished, the moving picture (encoded) and header are arranged as a moving picture file (step SC3), and stored in a managed moving picture file area (step SC4).

As described above, a thumbnail image is created (step SC11), while a moving picture file is being created. Thumbnail image data is created by reducing and encoding one frame of a moving picture. Data used for encoding is the same data as that used when encoding the corresponding moving picture data. Therefore, the reproduction referring data used when decoding thumbnail image data is the same as that used when reproducing the corresponding moving picture data. Therefore, the index number assigned to this reproduction referring data is used also for a header of a thumbnail image (step SC12).

An indexed thumbnail image is arranged as a thumbnail file (step SC13), and saved in a managed thumbnail file area (step SC14).

One or more thumbnail image may be created for one program (one moving picture file). When two or more thumbnail images are created, a thumbnail image may be create at every certain time (e.g., 20 minutes) or when a scene is changed after certain time (e.g., 15 minutes), for example, depending on the setting of the apparatus. The above time may be adjusted by a thumbnail creation setting menu. Therefore, when a thumbnail file setting menu screen is obtained, the number of thumbnail images and creation time interval may be set on the menu screen. Reproduction referring data may be set or selected on the menu by the user.

As described above, when a moving picture file and a thumbnail file corresponding to the moving picture file are created and saved, the corresponding reproduction referring data and index are also arranged as a file (step SC22), and saved in a managed reproduction referring data file area.

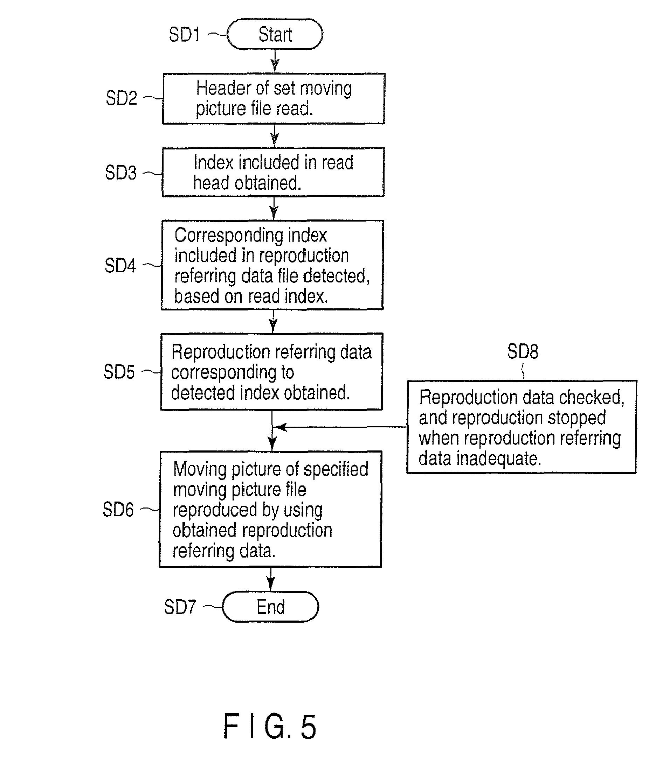

FIG. 5 is a flowchart of the process of reproducing a moving picture file. A reproduction moving picture file is specified (steps SD1 and SD2). When a moving picture file is specified, the header of the specified moving picture file is read (step SD2), under the control of the moving picture management module 221, and the index included in the header is obtained (step SD3). As the read index includes an index number, a corresponding index in the reproduction referring data file is detected (step SD4). Reproduction referring data corresponding to the detected index is obtained (step SD5). Based on the obtained reproduction referring data, a moving picture of the specified moving picture file is read from the recording medium 108, and decoded by the recording/reproduction processor 107 (step SD6). Reproduction is terminated by an instruction to terminate reproduction of a moving picture file (SD7).

It is permitted to provide a module, which checks whether reproduction referring data is necessary for reproducing a moving picture, before a moving picture of a moving picture file is decoded by the recording/reproduction processor 107. The module also checks the adequacy of a MAC address. If a MAC address is inadequate, reproduction of a moving picture is stopped (step SD8). At this time, a message stating that the moving picture cannot be reproduced may be given.

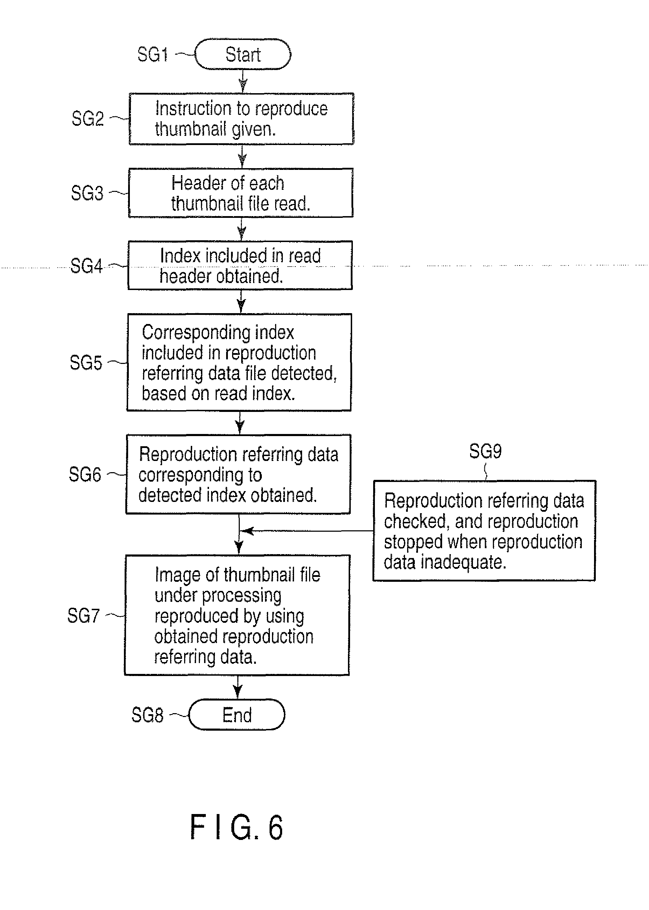

FIG. 6 is a flowchart of the process of reproducing a thumbnail file. When instruction to reproduce a thumbnail file is given (steps SG1 and SG2), a header of each thumbnail file is read (step SG3) under the control of the thumbnail file management module 222. An index included in the read head is obtained (step SG4). As the read index includes an index number, a corresponding index in a reproduction referring data file is detected (step SG5).

Reproduction referring data corresponding to the detected index is obtained (step SG6). Based on the obtained reproduction referring data, an image of the thumbnail file being processed is read from the recording medium 108, and decoded by the recording/reproduction processor 107 (step SG7). Reproduction is terminated by an instruction to terminate reproduction of a thumbnail (SG8).

It is permitted to provide a module, which checks whether reproduction referring data is necessary for reproducing a thumbnail image, before a thumbnail image is decoded by the recording/reproduction processor 107. The module also checks the adequacy of a MAC address. If a MAC address is inadequate, reproduction of a thumbnail image is stopped (step SG9). At this time, a message stating that the thumbnail image cannot be reproduced may be given.

In the above explanation, reproduction referring data is used in the recording/reproduction processor 107, under the control of the reproduction referring data management module 223. Reproduction referring data may be used in the encoder 121, and decoder 122. In other words, reproduction referring data may be used for encoding and decoding.

## Claims

1. A video signal processing apparatus **characterized by** comprising:
a moving picture file management module (221) configured to manage a moving picture file containing a moving picture;
a thumbnail file management module (222) configured to manage a thumbnail file containing a thumbnail image created from a part of the moving picture; and
a reproduction referring data management module (223) configured to manage a reproduction referring data file containing reproduction referring data necessary for reproducing the moving picture and thumbnail image,
wherein an index is assigned to the reproduction referring data, and data corresponding to the index is assigned to a header of the thumbnail file corresponding to the reproduction referring data.

2. The apparatus according to claim 1, **characterized in that** data to specify the index is assigned to each of headers of the thumbnail file and moving picture file.

3. The apparatus according to claim 1, **characterized in that** the reproduction referring data includes media access control data.

4. The apparatus according to claim 1, **characterized in that** the data to specify the index includes an index number of corresponding reproduction referring data.

5. The apparatus according to claim 3, **characterized by** further comprising a module configured to check whether the reproduction referring data is suitable for reproducing the moving picture or thumbnail image.

6. A video signal processing method **characterized by** comprising a moving picture file management module configured to manage a moving picture file containing a moving picture; a thumbnail file management module configured to mange a thumbnail file containing a thumbnail image created from a part of the moving picture; and a reproduction referring data management module configured to mange a reproduction referring data file containing reproduction referring data necessary for reproducing the moving picture and thumbnail image,
wherein an index is assigned to the reproduction referring data, and data corresponding to the index is assigned to a header of the thumbnail file corresponding to the reproduction referring data.

7. The method according to claim 6, **characterized in that** the data to specify the index is assigned to each of headers of the thumbnail file and moving picture file.
